# NOUVEAU FASCICULE DE BREVET EUROPEEN

(11) **EP 1 557 093 B2**
(45) Date de publication et mention de la décision concernant l'opposition: **17.08.2011**
(45) Mention de la délivrance du brevet: 11.10.2006
(21) Numéro de dépôt: 05290093.3
(22) Date de dépôt: 14.01.2005
(51) Int. Cl.: A23L 1/00

(54) **Procédé d'enrobage de produits alimentaires au moyen d'un amidon de légume réticulé**
Verfahren zum Beschichten von Lebensmitteln mit vernetzter Leguminosenstärke
Process for coating food products with a crosslinked legume starch

(30) Priorité: 20.01.2004 FR 0400503
(43) Date de publication de la demande: 27.07.2005
(73) Titulaire: Roquette Frères, 62136 Lestrem (FR)
(72) Inventeur: Serpelloni, Michel, 62660 Beuvry les Bethune (FR)
(74) Mandataire: Boulinguiez, Didier

(56) Documents cités:
- EP-A- 0 913 099
- EP-A- 1 228 700
- US-A- 5 855 946
- US-A1- 2003 198 711

## Description

La présente invention concerne un procédé d'enrobage d'aliments destinés à être cuits. Plus précisément, la présente invention concerne un procédé d'enrobage avant cuisson de légumes, de produits de viande ou encore de pâtes pour pizzas, beignets ou fonds de tarte, snacks, croquettes, céréales ou agents de panage, mettant en oeuvre un amidon particulier.

Les légumes frits et en particulier les pommes de terre frites sont en général très appréciés par les consommateurs. Ces produits sont fabriqués suivant des spécifications strictes relatives à la matière première utilisée et aux conditions de fabrication. Le consommateur souhaite un produit croustillant et doré. Or il est difficile, notamment en restauration rapide, de conserver après cuisson des frites croustillantes, même si celles-ci sont stockées à la chaleur. Lors de la cuisson, la périphérie du produit perd de l'eau et devient dure et croustillante. Après cuisson, l'eau présente au centre du produit réhumidifie la périphérie et les frites perdent leur croustillance.

Il est connu, en particulier pour les frites destinées à une surgélation, d'enrober celles-ci avec des solutions contenant des polysaccharides de haut poids moléculaire, afin d'améliorer leur aspect et leur croustillance après cuisson.

Le développement de produits d'enrobage pour les frites est en développement. Ces « coatings » sont conçus pour améliorer la conservation et la croustillance des frites après leur cuisson.

Le brevet EP 499.684 B1 décrit un procédé de préparation de frites congelées, dans lequel on enrobe les frites avant friture avec une composition comprenant une fécule de pomme de terre modifiée chimiquement et non gélatinisée, un amidon de maïs non gélatinisé, modifiée chimiquement, et une farine de riz. La combinaison de ces trois amidons permet d'obtenir des frites croustillantes, le goût de l'enrobage n'est pas décelé par le consommateur, et la farine de riz permet de maintenir une tendreté du produit.

Le brevet EP 935.927 B1 décrit un procédé de fabrication de pommes de terre en morceaux, séchés, lesquelles sont enrobées avant cuisson avec une composition d'enrobage comprenant un amidon natif et/ou prégélatinisé. La mise en oeuvre d'amidon natif est préférée en raison de la stabilité qu'elle confère au produit vis à vis de la réhydratation. Il est par ailleurs établi que de bons enrobages sont obtenus à partir d'amidons peu cuits, c'est à dire présentant des grains d'amidon non éclatés.

Par ailleurs, il est connu d'utiliser des amidons dits « riches en amylose », c'est à dire comprenant au moins 50% d'amylose pour enrober des produits à frire.

Ces amidons présentent de bonnes propriétés filmogènes et sont réputés pour être difficiles à cuire.

Le film d'enrobage obtenu constitue une barrière efficace à l'eau. On cherche de manière générale à mettre en oeuvre dans l'enrobage un polysaccharide présentant une température de transition vitreuse élevée, de manière à ce que le film d'enrobage reste sous forme solide le plus longtemps possible.

Le brevet EP 913.099 décrit un procédé d'enrobage de produits à cuire, en particulier de chips de pomme de terre, visant à limiter la reprise en eau des produits enrobés, mettant en oeuvre au moins deux amidons de source différente, en particulier la fécule de pomme de terre (PERFECTAMYL® FFC) et l'amidon de pois jaune (NASTAR®), ainsi qu'une fibre de pois. L'enrobage comprend également une farine de riz ou de blé de manière à conserver une croustillance satisfaisante.

Il existe plusieurs amidons développés à cet effet comme notamment le Crispy Clear Coating System développé par la Société AVEBE, à base d'amidon de pomme de terre modifié. Ses propriétés filmogènes et de croustillance ont été renforcées. Prévu pour garder la croustillance et la chaleur des frites plus de dix minutes après leur cuisson, cet amidon s'applique lors de la préparation des frites (surgelées) en partant d'un batter constitué d'une suspension de 30 à 40 % d'amidon dans l'eau.

Pour améliorer le croustillant des frites dans le temps, il est par ailleurs connu d'utiliser des amidons natifs et modifiés de riz.

De nombreuses autres compositions d'enrobage sont décrites, et comportent toujours une pluralité de constituants plus ou moins complexes. On associe ainsi souvent un amidon natif à une dextrine et une farine de riz. Certaines recettes mettent par ailleurs en oeuvre des gommes végétales telles que des gommes de guar par exemple.

Cherchant à améliorer encore l'état de la technique, la Demanderesse s'est alors attachée à trouver une solution simple permettant d'enrober divers produits alimentaires à cuire, et en particulier des légumes à frire tels que les pommes de terre frites.

Et c'est après de nombreux essais que la Demanderesse a trouvé une solution simple permettant d'obtenir des produits de qualité organoleptique tout à fait satisfaisante, en mettant en oeuvre une composition particulière comprenant un amidon de légumineuse modifié chimiquement et présentant une teneur en amylose inférieure à 40%. Comme il le sera démontré par ailleurs, la mise en oeuvre de cette composition donne des produits supérieurs, préférés à ceux de l'art antérieur.

L'invention a donc pour objet un procédé d'enrobage de produits alimentaires tel que défini à la revendication 1.

On entend par produits alimentaires au sens de la présente invention les morceaux crus de légumes, de viande, de poisson, de fruits, destinés à être cuits ou précuits par exemple en friture ou au four, ainsi que les pâtes à cuire telles que pâtes à pizza, pâtes à tarte. Ces produits alimentaires peuvent également consister en produits précuits congelés, et dont la cuisson complémentaire est réalisée par le consommateur. On citera de manière non limitative les pommes de terre frites congelées et autres légumes, les morceaux de poissons, de viande ainsi que tout autre aliment nécessitant un enrobage barrière à l'eau.

La légumineuse est le pois lisse.

Le terme « pois » est ici considéré dans son acception la plus large et incluant en particulier :
- toutes les variétés sauvages de « pois lisse » (« smooth pea »), et
- toutes les variétés mutantes de « pois lisse » et ce, quelles que soient les utilisations auxquelles on destine généralement lesdites variétés (alimentation humaine, nutrition animale et/ou autres utilisations).

Selon une autre variante avantageuse, la légumineuse est une plante, par exemple une variété de pois, donnant des graines contenant au moins 25 %, de préférence au moins 40 %, en poids d'amidon (sec/sec).

Par « amidon de légumineuse », on entend toute composition extraite et ce, de quelque manière que ce soit, d'une légumineuse et notamment d'une papilionacée, et dont la teneur en amidon est supérieure à 40 %, de préférence supérieure à 50 % et encore plus préférentiellement supérieure à 75 %, ces pourcentages étant exprimés en poids sec par rapport aux poids sec de ladite composition.

Avantageusement, cette teneur en amidon est supérieure à 90 % (sec/sec). Elle peut en particulier être supérieure à 95 %, y compris supérieure à 98 %.

On entend par amidon de légumineuse modifié un amidon qui a subi au moins un traitement de modification choisi dans le groupe comprenant les traitements chimiques, les traitements physiques et les traitements enzymatiques.

Les traitements chimiques comprennent en particulier toutes les opérations connues d'estérification, d'éthérification, de réticulation ou d'hydrolyse par voies acide ou oxydante. Selon l'invention, on met en oeuvre un amidon réticulé, de préférence au trimétaphosphate.

L'amidon de légumineuse selon l'invention est un amidon issu de « pois lisse », présentant une teneur en amylose comprise entre 30 et 40%, de préférence entre 35 et 40%, ces pourcentages étant exprimés en poids sec par rapport au poids sec d'amidon contenu dans ladite composition.

La réticulation est conduite selon toute technique connue de l'homme du métier, de manière à obtenir un taux élevé de réticulation. De préférence on utilisera comme agent réticulant le trimétaphosphate de sodium. A titre indicatif, on se limitera à un taux de réticulation exprimé en phosphore fixé de 0,4 % maximum.

Selon l'invention, on peut également envisager de modifier l'amidon réticulé par acétylation ou hydroxypropylation par exemple. Dans ce cas, le niveau de réticulation est généralement augmenté de manière à maintenir une viscosité suffisante de la composition d'enrobage.

Selon l'invention, la composition d'enrobage comprend de l'amidon de pois comme unique source d'amidon. Elle peut comprendre également divers additifs tels qu'arômes, épices, exhausteurs de goût, poudre levante, colorants. Elle peut également comprendre des maltodextrines, des gommes, et autres agents adaptés à l'enrobage.

Pour préparer la composition d'enrobage, il convient de mettre en solution dans l'eau l'amidon de pois réticulé, de manière à obtenir une viscosité comprise entre 500 et 1000 centipoises, cette viscosité étant donnée par une mesure Brookfield à 20°C. A titre indicatif, la matière sèche de la composition d'enrobage est comprise entre 35 et 45%. Avantageusement, ladite composition comprend 90% d'amidon en poids.

Les additifs nécessaires sont alors ajoutés à ladite composition.

Selon une variante préférée, la composition comprend également une dextrine. On entend par dextrine les produits obtenus par grillage à sec d'amidon en présence d'acide. Bien que tout type de dextrine puisse convenir dans le procédé selon l'invention, les dextrines de pois sont particulièrement préférées et en particulier de pois présentant une teneur en amylose comprise entre 30 et 40%, de préférence entre 35 et 40%. Celles-ci permettent avantageusement d'obtenir la même croustillance qu'avec une farine de riz habituellement utilisée.

En ce qui concerne les proportions de dextrine dans la composition d'enrobage, on préfère un ratio amidon/dextrine compris entre 2/1 et 1/4. Plus la proportion de dextrine sera importante dans la composition, moins la couche d'enrobage sera stable à la friture (tendance à éclater). Plus on diminue la proportion de dextrine dans la composition d'enrobage et plus on réduit la croustillance du produit frit. Il est donc avantageux de maintenir une proportion de dextrine suffisante dans la composition d'enrobage, l'idéal étant un ratio de 1/1.

Pour enrober les produits alimentaires conformément au procédé de la présente invention, on immerge les produits dans la composition d'enrobage à température ambiante, puis on procède à la cuisson des produits ainsi enrobés.

L'enrobage obtenu est pratiquement invisible sur le produit fini, il confère une croustillance satisfaisante même après 15 minutes de refroidissement, c'est à dire qu'il assure une très bonne stabilité à la reprise en eau du produit cuit.

L'invention sera mieux comprise à la lecture des exemples qui suivent, qui se veulent illustratifs et non limitatifs.

### Exemple 1 : préparation de frites surgelées

Des pommes de terre sont lavées, pelées et coupées en bâtonnets pour pomme de terre frites.

Ces frites sont immergées dans un bain d'enrobage dont la composition est la suivante :
Amidon : 229.5 g
Sel : 15 g
Poudre levante : 5 g
Gomme xanthane : 0,5 g
Eau : quantité suffisante pour obtenir une viscosité Brookfield comprise entre 500 et 1000 cP à température ambiante.

Différents amidons sont comparés :
Essai 1 : fécule de pomme de terre fortement réticulée par liaisons phosphate
Essai 2 : amidon de blé fortement réticulé par liaisons phosphate
Essai 3 : amidon de pois réticulé
Essai 4 : amidon de maïs à 70% d'amylose
Essai 5 : fécule de pomme de terre fortement réticulée PERFECTAMYL®FFC (AVEBE)

La composition d'enrobage est préparée par mélange des poudres dans l'eau, dans le bol d'un mixer KENWOOD. Le mélange est mixé jusqu'à obtention d'une solution homogène.

Les frites enrobées sont égouttées et séparées entre elles, puis plongées dans un bain de friture à 170 - 180°C. Elles sont ensuite égouttées, puis congelées à - 18°C.

Les frites congelées sont alors cuites 2min 30 en friteuse à 180°C, puis placées en étuve à 60°C pendant 15 minutes.

On procède alors à une dégustation toutes les 5 minutes pendant 15 minutes.

Les frites sont évaluées sur les paramètres suivants :
- croustillance et dureté, déterminée par un panel de dégustation
- aspect visuel de l'enrobage

Les frites de chaque essai sont classées par ordre de préférence :
3 > 2 > 1 (trop dures) > 4 (présence de cristaux) > 5 (peu croustillantes)

En ce qui concerne l'homogénéité de l'enrobage, les essais 2 et 3 sont les plus satisfaisants.

On réalise ensuite une formule d'enrobage comprenant 153 grammes d'amidon et 76.5 grammes de dextrine (soit un ratio 2/1). Le reste des constituants est identique.

Les formules comprennent :
A : amidon de pois réticulé + dextrine de pois
B : fécule de pomme de terre + dextrine de pomme de terre

Les frites sont dégustées et comparées les une aux autres par le même panel de dégustation.

L'amidon de pois réticulé en association avec la dextrine de pois donne des résultats supérieurs à ceux obtenus avec l'amidon de pois seul ou la fécule seule, et meilleurs que l'association fécule/dextrine de pomme de terre.

On remplace ensuite dans l'essai A la dextrine de pois par une farine de riz, couramment utilisée dans l'art antérieur pour conférer de la croustillance aux frites.

Les résultats obtenus sont identiques, ce qui permet de conclure à la substitution possible de farine de riz par une dextrine.

Conclusion : Les formules à base d'amidon de pois réticulé répondent aux critères demandés : croustillance des frites jusqu'à 15 minutes après cuisson et enrobage très peu visible. Les résultats sont encore meilleurs lorsqu'une partie de l'amidon est remplacée par une dextrine de base blé, pomme de terre, de préférence de pois. De très bons résultats ont été obtenus avec un ratio en poids amidon/dextrine de 1/1.

## Revendications

1. Procédé d'enrobage de produits alimentaires **caractérisé en ce qu'**on enrobe lesdits produits préalablement à leur cuisson avec une composition aqueuse d'enrobage comprenant un amidon de légumineuse réticulé présentant une teneur en amylose inférieure à 40%,
**caractérisé en ce que** ledit amidon est un amidon de pois lisse présentant une teneur en amylose comprise entre 30 et 40%, ces pourcentages étant exprimés en poids sec par rapport au poids sec d'amidon contenu dans ladite composition.

2. Procédé selon la revendication 1, **caractérisé en ce que** ledit amidon est un amidon de pois lisse présentant une teneur en amylose comprise entre 35 et 40%.

3. Procédé selon l'une ou l'autre des revendications 1 et 2, **caractérisé en ce que** ladite composition comprend en outre une dextrine.

4. Procédé selon l'une quelconque des revendications 1 à 3, **caractérisé en ce que** ladite dextrine est une dextrine de pois.

5. Procédé selon l'une quelconque des revendications 1 à 4, **caractérisé en ce que** le ratio en poids d'amidon/dextrine est compris entre 2/1 et 1/4.

6. Procédé selon l'une quelconque des revendications 1 à 5, **caractérisé en ce que** ladite composition présente une viscosité Brookfield comprise entre 500 et 1000 centipoises à 20°C.

7. Procédé selon l'une quelconque des revendications 1 à 6, **caractérisé en ce que** ladite composition comprend de l'amidon de pois comme unique source d'amidon.

## Claims

1. Process for coating food products, **characterized in that** said products are coated, before they are cooked, with an aqueous coating composition comprising a crosslinked legume starch having an amylose content of less than 40%,
**characterized in that** said starch is a starch from smooth pea having an amylose content of between 30 and 40%, these percentages being expressed as dry weight relative to the dry weight of starch contained in said composition.

2. Process according to claim 1, **characterized in that** said starch is a starch from smooth pea having an amylose content of between 35 and 40%.

3. Process according to either of claim 1 or 2, **characterized in that** said composition additionally comprises a dextrin.

4. Process according to any one of claims 1 to 3, **characterized in that** said dextrin is a pea dextrin.

5. Process according to any one of claims 1 to 4, **characterized in that** starch/dextrin weight ratio is between 2/1 and 1/4.

6. Process according to any one of claims 1 to 5, **characterized in that** said composition has a Brookfield viscosity of between 500 and 1000 centipoises at 20°C.

7. Process according to any one of claims 1 to 6, **characterized in that** said composition comprises pea starch as sole source of starch.

## Patentansprüche

1. Verfahren zum Umhüllen von Nahrungsmittel-Produkten, **dadurch gekennzeichnet, dass** diese Produkte vor ihrem Backen mit einer wässrigen Umhüllungs-Zusammensetzung umhüllt werden, welche eine vernetzte Hülsenfrucht-Stärke umfasst, welche einen Gehalt an Amylose von weniger als 40% aufweist,
**dadurch gekennzeichnet, dass** die Stärke eine glatte Erbsen-Stärke ist, welche einen Amylose-Gehalt aufweist, welcher zwischen 30 und 40% umfasst ist, wobei diese Prozent-Angaben als Trockengewicht bezüglich des in dieser Zusammensetzung enthaltenen Stärke-Trockengewichts ausgedrückt sind.

2. Verfahren gemäß Anspruch 1, **dadurch gekennzeichnet, dass** die Stärke eine glatte Erbsen-Stärke ist, welche einen Amylose-Gehalt aufweist, welcher zwischen 35 und 40% umfasst ist.

3. Verfahren gemäß einem (oder dem anderen) der Ansprüche 1 und 2, **dadurch gekennzeichnet, dass** die Zusammensetzung ferner ein Dextrin umfasst.

4. Verfahren gemäß einem der Ansprüche 1 bis 3, **dadurch gekennzeichnet, dass** das Dextrin ein Erbsen-Dextrin ist.

5. Verfahren gemäß einem der Ansprüche 1 bis 4, **dadurch gekennzeichnet, dass** das GewichtsVerhältnis Stärke/Dextrin zwischen 2/1 und 1/4 umfasst ist.

6. Verfahren gemäß einem der Ansprüche 1 bis 5, **dadurch gekennzeichnet, dass** die Zusammensetzung bei 20°C eine zwischen 500 und 1000 Centipoise umfasste Brookfield-Viskosität aufweist.

7. Verfahren gemäß einem der Ansprüche 1 bis 6, **dadurch gekennzeichnet, dass** die Zusammensetzung die Erbsen-Stärke als einzige Stärke-Quelle aufweist.
